# FASCICULE DE BREVET EUROPEEN

(11) **EP 4 582 344 B1**
(45) Date de publication et mention de la délivrance du brevet: **13.05.2026**
(21) Numéro de dépôt: 24206943.3
(22) Date de dépôt: 16.10.2024
(51) Int. Cl.: B64D 31/09, B64D 43/00, B64D 45/00, B64C 27/12

(54) **PROCÉDÉ DE SURVEILLANCE D'UN FONCTIONNEMENT D'UNE INSTALLATION MOTRICE DE GIRAVION ET GIRAVION ASSOCIÉ**
VERFAHREN ZUR ÜBERWACHUNG DER FUNKTION EINER DREHFLÜGLER-ANTRIEBSANLAGE UND ZUGEHÖRIGER DREHFLÜGLER
METHOD FOR MONITORING AN OPERATION OF A ROTORCRAFT POWER PLANT AND ASSOCIATED ROTORCRAFT

(30) Priorité: 08.01.2024 FR 2400151
(43) Date de publication de la demande: 09.07.2025
(73) Titulaire: Airbus Helicopters, 13725 Marignane Cedex (FR)
(72) Inventeur: MILLET, Arnaud, 13330 Pelissanne (FR); DUMUR, Guillaume, 13300 Salon de Provence (FR)
(74) Mandataire: GPI Brevets

(56) Documents cités:
- GB-A- 2 079 707
- US-A1- 2011 173 988

## Description

La présente invention concerne un procédé de surveillance d'un fonctionnement d'une installation motrice de giravion.

Un giravion comporte au moins un rotor participant à sa sustentation, voire à sa propulsion.

Par exemple, un giravion peut comprendre un rotor principal participant à sa sustentation et à sa propulsion, ce rotor principal ayant des pales à pas variable collectivement et cycliquement. De plus, le giravion peut comprendre un système participant au contrôle du mouvement en lacet, tel qu'un autre rotor principal ou un rotor arrière par exemple. Le système de contrôle du pas est activable par exemple par le pilote ou l'équipage. Alternativement, le système est activable par un système de contrôle automatique, dit pilote automatique.

Pour mettre en rotation le ou les rotors, le giravion comporte une installation motrice éventuellement multimoteur, et une chaîne de transmission de puissance allant des moteurs à un ou des rotors.

Par exemple, deux moteurs sont connectés à une boite de transmission de puissance, cette boite de transmission de puissance mettant en rotation le ou les rotors. La boîte de transmission de puissance comporte alors une entrée mécanique par moteur, les entrées mécaniques étant en prise avec un combinateur, le combinateur entrainant une sortie mécanique de la boite de transmission de puissance par rotor. Les entrées moteur, le combinateur, et les sorties mécaniques peuvent comprendre au moins un pignon ou une roue dentée, au moins un arbre, au moins un étage de réduction de vitesse...

Les moteurs peuvent être des moteurs thermiques possédant un arbre de sortie mis en mouvement via la combustion de carburant. Par exemple, au moins un moteur peut être un turbomoteur muni d'un générateur de gaz et d'une turbine libre de travail connectée à l'arbre de sortie.

Chaque moteur peut être piloté par un système de régulation connu sous l'acronyme FADEC et l'expression anglaise « Full Authority Digital Engine Control ». Un tel système de régulation comporte un calculateur moteur en communication avec des senseurs mesurant des valeurs de paramètres de fonctionnement du moteur piloté, voire du giravion, tels qu'une vitesse de rotation d'un générateur de gaz ou d'une turbine libre, une température interne, une vitesse de rotation d'un rotor du giravion.

Ce calculateur moteur est alors configuré pour piloter un doseur de carburant alimentant le moteur associé afin, par exemple, de stabiliser une vitesse de rotation de l'arbre de sortie à une vitesse de consigne, quelle que soit la puissance consommée par cet arbre de sortie. Cette puissance varie en fonction des actions d'un pilote sur des commandes de vol, en particulier sur des commandes faisant varier collectivement et/ou cycliquement le pas des pales du rotor principal sur un giravion. Alternativement, ces commandes de vol peuvent être actionnées par un pilote automatique.

Une régulation en fonction de la vitesse de rotation des arbres de sortie des moteurs assure alors une adéquation permanente entre la puissance produite conjointement par les arbres de sortie de ces moteurs et la puissance consommée par le ou les rotors, de manière à ce que ce ou ces rotors tournent à une vitesse de rotation nominale compatible avec sa ou leur fonction de génération de sustentation du giravion.

Néanmoins, le calculateur moteur est configuré pour éviter que la puissance développée par un moteur génère le dépassement d'une limite mécanique acceptable par le moteur ou la chaîne de transmission de puissance. Usuellement, divers régimes de fonctionnement associés à des limites et des durées d'utilisation propres sont alors définis. Pour chaque régime de fonctionnement, ces limites peuvent comprendre, par exemple, une limite de couple d'un couple moteur délivré par un moteur, une limite d'une température interne d'un moteur, une limite de vitesse de rotation d'un arbre d'un moteur, une limite de couple d'au moins un organe de la chaîne de transmission de puissance ...

Sur un aéronef multimoteur, on connait des régimes de fonctionnement dits « AEO », pour l'expression anglaise « All Engines Operative » utilisables pendant certaines durées lorsque tous les moteurs fonctionnent normalement, et des régimes de fonctionnement dits « OEI », pour l'expression anglaise « One Engine Inoperative » utilisables pendant certaines durées lorsqu'un des moteurs est en panne. L'utilisation de certains régimes de fonctionnement peut induire une action de maintenance sur les moteurs, voire sur la chaîne de transmission de puissance.

Dès lors, un calculateur moteur pilote un système de régulation du doseur de carburant de manière à moduler la puissance du moteur associé. Le système de régulation du doseur de carburant est ainsi configuré pour faire tendre la vitesse de rotation de l'arbre de sortie vers une valeur de consigne, tout en évitant de dépasser une limite.

Par ailleurs, en cas de défaillance ou de panne du système de régulation d'un moteur, le débit de carburant alimentant le moteur concerné est figé à la dernière valeur de débit utilisée. Un pilote en est informé et peut alors soit couper le moteur concerné par sécurité, soit poursuivre le vol en l'état, c'est-à-dire avec un moteur non régulé.

De manière plus générale, la gestion d'une absence de régulation d'un des moteurs d'un giravion peut être complexe à mettre en œuvre pour piloter un tel giravion en toute sécurité.

Les documents GB2079707 et US 2011/173988 divulguent quant à eux des systèmes de commande d'un moteur, tel une turbine à gaz, utilisés en cas de défaillance d'un autre moteur. De tels systèmes sont cependant éloignés de l'invention.

La présente invention a alors pour objet de proposer un procédé permettant de limiter la charge de travail d'un équipage en présence d'une défaillance d'un système de régulation d'un moteur sur un giravion ou en l'absence de régulation d'un des moteurs. En outre, ce procédé et le giravion associé peuvent permettre à un pilote d'effectuer des manœuvres de pilotage en toute sécurité, sans risquer de dégrader la chaîne de transmission de puissance mécanique ou un rotor du giravion.

L'invention se rapporte ainsi à un procédé de surveillance d'un fonctionnement d'une installation motrice de giravion, l'installation motrice comportant au moins un moteur, le giravion comportant au moins un rotor de sustentation entraîné en rotation par l'installation motrice, ledit procédé de surveillance comportant les étapes suivantes :
- détection d'une panne de régulation affectant un système de régulation dudit au moins un moteur,
- détection d'une vitesse de rotation NR courante dudit au moins un rotor de sustentation,
- détermination d'une condition de compatibilité ou d'une condition d'incompatibilité entre une phase de vol courante et la vitesse de rotation NR.

Selon l'invention, un tel procédé de surveillance est remarquable en ce qu'il comporte les étapes suivantes :
- dans un premier mode de fonctionnement, en présence de la condition de compatibilité et de la panne de régulation, génération d'une première alerte représentative simultanément de la panne de régulation et de la condition de compatibilité, et
- dans un second mode de fonctionnement, en présence de la condition d'incompatibilité et de la panne de régulation, génération d'une seconde alerte représentative simultanément de la panne de régulation et de la condition d'incompatibilité.

En outre, lors d'une panne de régulation d'un moteur, le doseur de carburant alimentant en carburant une chambre de combustion du moteur associé reste alors bloqué dans une position courante et continue de délivrer un débit de carburant constant. En fonction de la phase de vol courante, et notamment d'un changement de commande de pas des pales du rotor, la vitesse de rotation NR du rotor peut alors évoluer sans être contrôlée et sortir d'une plage nominale de fonctionnement.

En outre, la phase de vol courante peut être identifiée par le procédé de surveillance ou identifiée par un autre procédé et transmise pour permettre de réaliser la détermination de la condition de compatibilité ou alternativement de la condition d'incompatibilité.

Dans le premier mode de fonctionnement, un tel procédé de surveillance permet à un pilote de pouvoir continuer une phase de vol malgré la panne de régulation d'au moins un moteur et ce, tant que la vitesse de rotation NR est maintenue dans une plage nominale de fonctionnement pour la phase de vol courante.

La première alerte est ainsi générée uniquement à titre informatif et le pilote peut continuer sa mission sans action particulière à opérer.

Dans le second mode de fonctionnement, si la panne de régulation d'au moins un moteur est toujours présente et que la vitesse de rotation NR sort la plage nominale de fonctionnement pour la phase de vol courante, alors la seconde alerte peut permettre au pilote d'effectuer une procédure d'urgence prédéterminée. Par exemple, le pilote peut réaliser une action permettant de faire revenir la vitesse de rotation NR dans sa plage nominale ou de couper le moteur affecté par la panne de régulation.

Une telle seconde alerte est distincte de la première alerte pour permettre à un pilote de les différencier.

En outre, chaque alerte peut prendre la forme d'une alarme visuelle, par exemple par le biais de l'émission d'une lumière avec une diode électroluminescente ou un équivalent ou de l'affichage sur un écran d'un ou plusieurs caractères, d'une alarme sonore, par le biais d'un haut-parleur, et/ou d'une alarme haptique, par exemple à l'aide d'une unité vibrante faisant vibrer un organe tenu ou porté par un individu.

Selon un premier exemple de réalisation de l'invention, la condition de compatibilité peut être déterminée lorsque la vitesse de rotation NR courante appartient à un intervalle de valeurs défini par une consigne de vitesse de rotation moins une première marge (n) et la consigne de vitesse de rotation plus une seconde marge (m) et alternativement la condition d'incompatibilité peut être déterminée lorsque la vitesse de rotation NR courante est exclue de cet intervalle de valeurs.

Autrement dit dans ce cas, la condition de compatibilité et la condition d'incompatibilité sont fonctions d'une consigne de vitesse de rotation courante, d'une première marge (n) et d'une seconde marge (m). La première marge (n) et la seconde marge (m) peuvent par exemple consister en un pourcentage de la consigne de vitesse de rotation.

En pratique, la consigne de vitesse de rotation peut être variable en fonction de la phase de vol courante.

Une telle consigne de vitesse de rotation peut être générée par un calculateur de pilotage d'un système avionique du giravion en fonction notamment de conditions atmosphériques de la phase de vol et des consignes de commande permettant au pilote de contrôler le giravion.

De même, la première marge (n) et la seconde marge (m) peuvent être variables en fonction de la phase de vol courante.

En effet, selon la phase de vol courante les première et seconde marges (n) et (m) peuvent être modifiées et ainsi permettre d'adapter les bornes de la plage nominale de fonctionnement correspondant aux valeurs acceptables pour la vitesse de rotation NR du rotor.

Selon un second exemple de réalisation de l'invention, la condition de compatibilité peut être déterminée lorsque la vitesse de rotation NR courante appartient à une plage prédéterminée de valeurs acceptables permettant de continuer la phase de vol courante et alternativement la condition d'incompatibilité peut être déterminée lorsque la vitesse de rotation NR courante est exclue de la plage prédéterminée de valeurs acceptables permettant de continuer la phase de vol courante.

Dans ce cas, les bornes de la plage nominale de fonctionnement correspondant aux valeurs acceptables pour la vitesse de rotation NR du rotor sont fixes et prédéfinies par exemple par des essais au sol, des tests en vol ou des simulations.

Dans ce cas, la plage prédéterminée peut comporter une borne supérieure définie pour qu'une vitesse tangentielle en bout de pale d'une pale dudit au moins un rotor de sustentation soit maintenue inférieure à la vitesse du son.

Une telle borne supérieure peut ainsi permettre de garantir l'intégrité du rotor de sustentation. Alternativement ou complémentairement, cette borne supérieure peut être définie afin de fournir au giravion des performances maximales lors d'une phase de vol dite stationnaire ou à basse vitesse et/ou afin de limiter l'empreinte acoustique générée par la rotation du rotor dans une cabine du giravion.

De même, la plage prédéterminée peut comporter une borne inférieure définie pour fournir une poussée minimale permettant au giravion d'effectuer un vol à une altitude constante à une vitesse d'avancement de croisière.

La borne inférieure peut quant à elle être choisie pour permettre de réduire l'empreinte acoustique d'un giravion sur l'environnement extérieur. En effet, un telle empreinte acoustique est directement liée à la vitesse de rotation NR du rotor et augmente lorsque la vitesse de rotation NR augmente.

Alternativement ou complémentairement, cette borne inférieure peut être définie afin d'éviter une chute d'altitude du giravion trop importante en cas d'un panne moteur et avant de pouvoir atteindre une vitesse de rotation du rotor permettant d'opérer une phase de vol en autorotation.

En pratique, un passage du premier mode de fonctionnement vers le second mode de fonctionnement peut être irréversible.

Une telle irréversibilité est en effet une protection supplémentaire. Elle permet de contribuer à la sûreté du vol et de minimiser les risques de confusion pour le pilote.

Avantageusement, la génération de la première alerte peut comporter un premier affichage sur un afficheur d'au moins une information représentée avec une première couleur prédéterminée.

Cette ou ces informations peuvent par exemple comporter un message alphanumérique ou encore une forme géométrique telle que notamment un bandeau, un rectangle, un losange, un cercle, un trait, etc ....

L'afficheur peut par exemple comporter un écran d'une planche de bord du giravion ou encore un dispositif d'affichage dit « tête-haute » qui peut être notamment porté par le pilote et être intégré à des lunettes ou un écran de casque.

La première couleur prédéterminée peut être par exemple ambre ou orange.

De même, la génération de la seconde alerte peut comporter un second affichage sur l'afficheur de ladite au moins une information représentée avec une seconde couleur prédéterminée différente de la première couleur prédéterminée.

Cette ou ces informations peuvent par exemple comporter un message alphanumérique ou encore une forme géométrique telle que notamment un bandeau, un rectangle, un losange, un cercle, un trait, etc ....

Le message et/ou la forme géométrique de cette seconde alerte peuvent être les mêmes que ceux de la première alerte, mais la seconde couleur prédéterminée peut être par exemple rouge et donc distincte d'une couleur ambre ou orange.

En outre, ledit au moins un moteur peut par exemple comporter un premier moteur et un deuxième moteur. Dans ce cas, lors d'un basculement dans le second mode de fonctionnement, le procédé peut mettre en œuvre d'autres étapes supplémentaires visant à ramener la vitesse de rotation NR du rotor dans sa plage de fonctionnement nominale.

Ainsi, selon une première variante, la panne de régulation affectant un premier système de régulation du premier moteur, lorsque la seconde alerte est générée, le procédé peut comporter une commande d'un arrêt du premier moteur.

Une telle commande d'un arrêt du premier moteur peut par exemple consister en une fermeture d'une électrovanne d'alimentation en carburant du premier moteur. Une fois l'électrovanne fermée, un premier doseur de carburant relié à la chambre de combustion du premier moteur ne peut plus fournir de carburant et le premier moteur s'arrête. Mais le rotor reste entraîné en rotation par le deuxième moteur dont le système de régulation n'est pas affecté par une panne.

Selon une seconde variante, la panne de régulation affectant un premier système de régulation du premier moteur, lorsque la seconde alerte est générée, le procédé peut comporter une commande d'un dispositif réversible de transmission pour empêcher la transmission d'un couple moteur du premier moteur vers une chaîne de transmission de puissance.

Une telle commande d'un dispositif réversible de transmission du premier moteur peut par exemple consister en un débrayage d'un système d'embrayage ou d'une roue libre pilotée agencé entre un arbre de sortie du premier moteur et un arbre d'entrée d'une boite de transmission de puissance. Dans ce cas, le premier moteur ne s'arrête pas, mais il ne fournit plus de couple moteur au rotor via la chaîne de transmission de puissance.

La présente invention a aussi pour objet un giravion comportant au moins un rotor de sustentation entraîné en rotation par une installation motrice, l'installation motrice comportant au moins un moteur, ledit giravion comportant un système de surveillance comportant :
- au moins un senseur de panne détectant une panne de régulation affectant un système de régulation dudit au moins un moteur,
- un senseur de vitesse mesurant une vitesse de rotation NR courante dudit au moins un rotor de sustentation, et
- un contrôleur déterminant une condition de compatibilité ou une condition d'incompatibilité entre une phase de vol courante et la vitesse de rotation NR.

Selon l'invention, un tel giravion est remarquable en ce que ledit contrôleur génère, dans un premier mode de fonctionnement, en présence de la condition de compatibilité et de la panne de régulation, une première alerte représentative simultanément de la panne de régulation et de la condition de compatibilité, et en ce que ledit contrôleur génère, dans un second mode de fonctionnement, en présence de la condition d'incompatibilité et de la panne de régulation, une seconde alerte représentative simultanément de la panne de régulation et de la condition d'incompatibilité.

En outre, un tel senseur de panne peut être intégré au système de régulation dudit au moins un moteur, qui est relié par voie filaire ou non filaire au contrôleur. Le senseur de panne transmet ainsi directement au contrôleur l'information d'une panne du système de régulation concerné.

De même, le senseur de vitesse peut être intégré à un système avionique qui est relié par voie filaire ou non filaire au contrôleur. Un tel système avionique transmet également des informations représentatives des conditions de vol pour en déduire une phase de vol courante.

A partir des informations reçues, le contrôleur en déduit la condition de compatibilité ou la condition d'incompatibilité entre la phase de vol courante et la vitesse de rotation NR.

Lors de la réception de l'information de la panne de régulation, le contrôleur peut alors déterminer s'il doit mettre en œuvre le premier mode de fonctionnement ou le second mode de fonctionnement et ainsi générer l'alerte correspondante.

L'invention et ses avantages apparaîtront avec plus de détails dans le cadre de la description qui suit avec des exemples donnés à titre illustratif en référence aux figures annexées qui représentent :
la figure 1, un schéma d'un giravion en vue de côté équipé d'un système de surveillance conforme à l'invention,
la figure 2, un logigramme illustrant un procédé de surveillance conforme à l'invention,
la figure 3, un logigramme illustrant une première alternative du procédé de surveillance conforme à l'invention, et
la figure 4, un logigramme illustrant une seconde alternative du procédé de surveillance conforme à l'invention.

Les éléments présents dans plusieurs figures distinctes sont affectés d'une seule et même référence.

Comme déjà évoqué l'invention concerne un giravion équipé d'un système de surveillance d'une installation motrice et le procédé de surveillance associé.

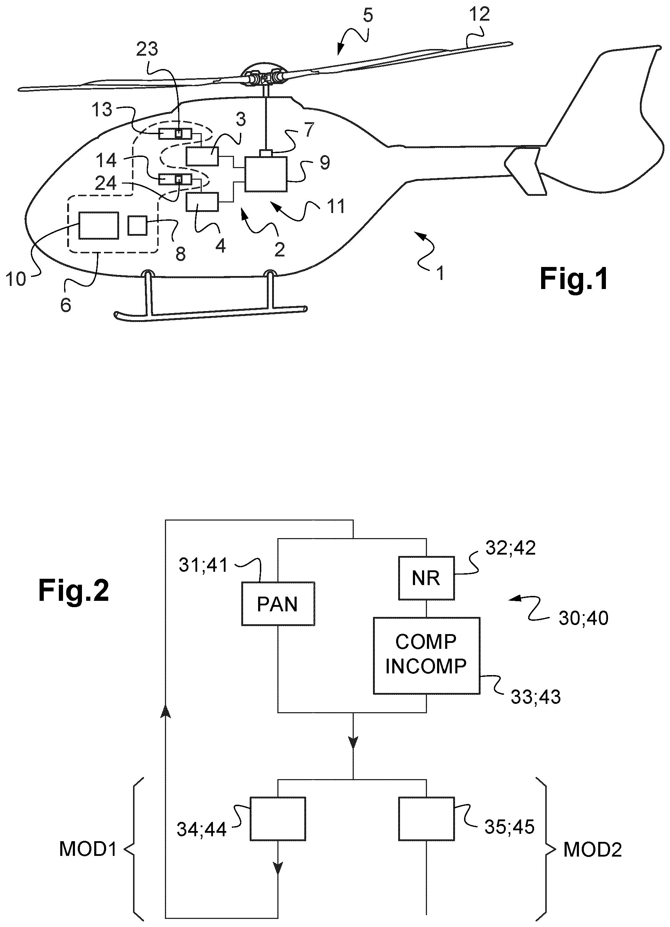

Tel que représenté à la figure 1, un tel giravion 1 comporte une installation motrice 2 munie d'au moins un moteur 3, 4 permettant l'entraînement en rotation d'au moins un rotor de sustentation 5 via une chaîne de transmission de puissance 11. Une telle chaîne de transmission de puissance 11 peut notamment comporter une boîte de transmission de puissance 9 présentant au moins un arbre d'entrée reliée respectivement à un arbre de sortie de chaque moteur 3, 4.

Une telle boîte de transmission de puissance 9 comporte alors un sortie mécanique destinée à entraîner en rotation un mât rotor solidaire en rotation dudit au moins un rotor de sustentation 5.

En outre, le débit de carburant d'alimentation dudit au moins un moteur 3, 4 est régulé initialement par un système de régulation dédié 13, 14 relié à un doseur de carburant non représenté.

Le système de surveillance 6 comporte alors au moins un senseur de panne 23, 24 apte à détecter une panne de régulation PAN affectant le système de régulation 13, 14 dudit au moins un moteur 3, 4.

Le système de surveillance 6 comporte également un senseur de vitesse 7, par exemple agencé au niveau du mât rotor, et apte à mesurer une vitesse de rotation NR courante dudit au moins un rotor de sustentation 5.

Par senseur de panne 23, 24 et senseur de vitesse 7, on entend ici des capteurs physiques capables de mesurer directement le paramètre en question, mais aussi un système pouvant comprendre un ou plusieurs capteur(s) physique(s) ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir d'une ou de plusieurs mesures brutes.

Le système de surveillance 6 comporte alors un contrôleur 8 relié par voie filaire ou non filaire avec le senseur de vitesse 7 et un ensemble d'autres capteurs non représentés, par exemple d'un système avionique du giravion 1, configurés pour permettre d'identifier une phase de vol courante du giravion 1.

L'ensemble de capteurs configuré pour identifier une phase de vol courante peut notamment comprendre, mais sans s'y limiter, un calculateur de données aérodynamiques ADC, un système de référence de cap et d'attitude AHRS, un altimètre radar Rad Alt et un système de positionnement global par satellites GPS.

Le calculateur de données aérodynamiques ADC fournit au système de surveillance 6 dans le mode de réalisation non limitatif décrit, mais sans s'y limiter, l'altitude barométrique, la vitesse de déplacement du giravion 1 par rapport à l'air et la vitesse verticale brute du giravion 1.

Le système de référence de cap et d'attitude AHRS fournit au système de surveillance 6 dans le mode de réalisation non limitatif décrit, mais sans s'y limiter, des informations d'attitude et de cap, d'accélération et de taux de descente.

Avec l'entrée du calculateur de données aérodynamiques ADC, le système de référence de cap et d'attitude AHRS fournit une vitesse verticale instantanée.

Avec l'entrée d'un système de positionnement global par satellites GPS et/ou d'un système avionique de vol FMS, le système de référence de cap et d'attitude AHRS fournit une position de navigation et une vitesse sol combinées dans chaque direction.

L'altimètre radar Rad Alt fournit la hauteur du giravion 1 au-dessus du sol et de l'eau.

Le contrôleur 8 permet ainsi de déterminer une condition de compatibilité COMP ou une condition d'incompatibilité INCOMP entre une phase de vol courante et la vitesse de rotation NR.

En outre, le contrôleur 8 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

En outre, le système de surveillance 6 peut également comporter un afficheur 10 permettant d'afficher à un pilote du giravion 1 deux informations distinctes d'alerte lorsqu'une panne de régulation PAN est détectée.

En outre, selon les figures 2 à 4, l'invention concerne également un procédé de surveillance 30, 40 du fonctionnement de l'installation motrice 2 entraînant en rotation le ou les rotors de sustentation 5.

Par ailleurs, des instructions ou un programme d'ordinateur peuvent être stockés dans une mémoire du système de surveillance 6. Le système de surveillance 6 peut alors exécuter ces instructions ou ce programme pour mettre en œuvre le procédé de surveillance 30, 40.

Un tel procédé de surveillance 30, 40 comporte ainsi une détection 31, 41 d'une panne de régulation PAN affectant un système de régulation 13, 14 dudit au moins un moteur 3, 4.

Le procédé de surveillance 30, 40 comporte également une détection 32, 42 de la vitesse de rotation NR courante dudit au moins un rotor de sustentation 5 et une détermination 33, 43 d'une condition de compatibilité COMP ou d'une condition d'incompatibilité INCOMP entre une phase de vol courante et la vitesse de rotation NR. Par suite, la condition de compatibilité COMP et la condition d'incompatibilité INCOMP sont deux conditions antagonistes qui ne peuvent être vérifiées simultanément.

Dès lors, dans un premier mode de fonctionnement MOD1, en présence de la condition de compatibilité COMP et de la panne de régulation PAN, le procédé de surveillance 30, 40 comporte une génération 34, 44 d'une première alerte représentative simultanément de la panne de régulation PAN et de la condition de compatibilité COMP.

Alternativement, et dans un second mode de fonctionnement MOD2, en présence de la condition d'incompatibilité INCOMP et de la panne de régulation PAN, le procédé de surveillance 30, 40 comporte une génération 35, 45 d'une seconde alerte représentative simultanément de la panne de régulation PAN et de la condition d'incompatibilité INCOMP.

En outre, le passage du premier mode de fonctionnement MOD1 vers le second mode de fonctionnement MOD2 peut être irréversible pour des raisons de sûreté du vol.

Les étapes de génération 34, 44 d'une première alerte et de génération 35, 45 d'une seconde alerte sont ainsi mises en œuvre par le contrôleur 8 qui est apte à générer au moins deux alertes distinctes l'une de l'autre et ainsi informer le pilote du giravion 1 d'un niveau de sûreté courant permettant ou interdisant de continuer une mission lors d'une panne de régulation PAN.

En outre, différentes alternatives permettent de déterminer les conditions de compatibilité COMP et d'incompatibilité INCOMP.

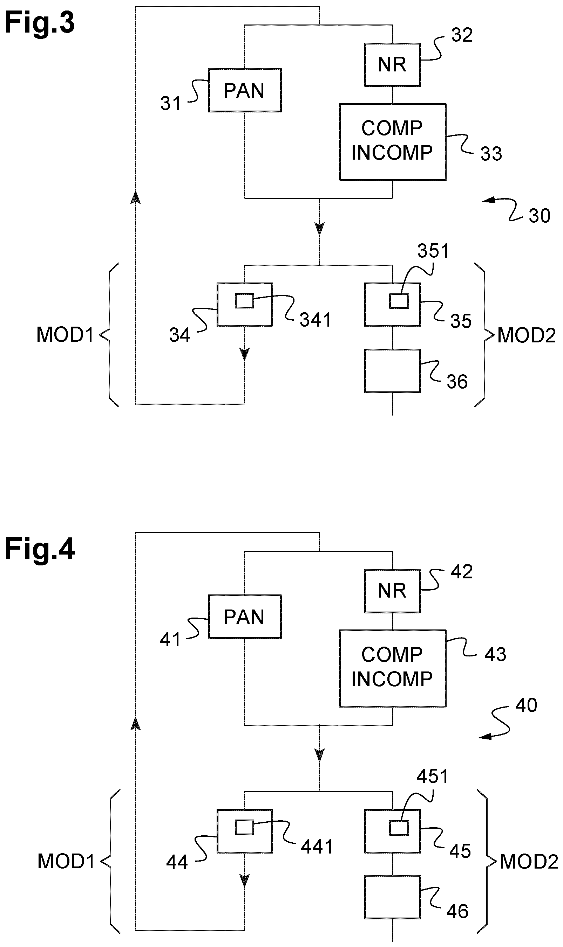

Selon une première alternative du procédé de surveillance 30 représentée à la figure 3, la condition de compatibilité COMP est par exemple déterminée lorsque la vitesse de rotation NR courante appartient à un intervalle de valeurs défini par une consigne de vitesse de rotation NRcons moins une première marge n et la consigne de vitesse de rotation NRcons plus une seconde marge m et alternativement la condition d'incompatibilité INCOMP est déterminée lorsque la vitesse de rotation NR courante est exclue de cet intervalle de valeurs.

En pratique, une telle consigne de vitesse de rotation NRcons peut être variable en fonction de la phase de vol courante identifiée par le contrôleur 8.

De même, la première marge n et la seconde marge m peuvent également être variables en fonction de la phase de vol courante.

Par ailleurs, la génération 34 de la première alerte peut comporter un premier affichage 341 sur l'afficheur 10 d'au moins une information représentée avec une première couleur prédéterminée.

La génération 35 de la seconde alerte peut quant à elle comporter un second affichage 351 sur l'afficheur 10 de ladite au moins une information représentée avec une seconde couleur prédéterminée différente de la première couleur prédéterminée.

Par exemple, la première couleur prédéterminée peut être ambre et la seconde couleur prédéterminée peut être rouge.

Ladite au moins une information peut par exemple comporter un message alphanumérique « FAIL » indiquant une panne de régulation PAN et étant complétée avec le système de régulation concerné 13 ou 14 « FADEC1 » ou « FADEC2 ».

De plus, lorsque le giravion 1 comporte un premier moteur 3 et un deuxième moteur 4, et que la panne de régulation PAN affecte le premier système de régulation 13 du premier moteur 3, le procédé 30 peut comporter une commande 36 d'un arrêt du premier moteur 3.

Une telle commande 36 peut alors être mise en œuvre après la génération 35 de la seconde alerte, par exemple automatiquement après un intervalle de temps prédéterminé ou manuellement par un pilote du giravion 1.

Selon une seconde alternative du procédé de surveillance 40 représentée à la figure 4, la condition de compatibilité COMP peut être déterminée lorsque la vitesse de rotation NR courante appartient à une plage prédéterminée de valeurs acceptables permettant de continuer la phase de vol courante et alternativement la condition d'incompatibilité INCOMP peut être déterminée lorsque la vitesse de rotation NR courante est exclue de cette plage prédéterminée de valeurs acceptables.

Par exemple, la plage prédéterminée peut comporter une borne supérieure définie pour qu'une vitesse tangentielle en bout de pale d'une pale 12 dudit au moins un rotor de sustentation 5 soit maintenue inférieure à la vitesse du son.

De même, la plage prédéterminée peut comporter une borne inférieure définie pour fournir une poussée minimale permettant au giravion 1 d'effectuer un vol à une altitude constante à une vitesse d'avancement de croisière.

Par ailleurs, la génération 44 de la première alerte peut comporter un premier affichage 441 sur l'afficheur 10 d'au moins une information représentée avec une première couleur prédéterminée.

La génération 45 de la seconde alerte peut quant à elle comporter un second affichage 451 sur l'afficheur 10 de ladite au moins une information représentée avec une seconde couleur prédéterminée différente de la première couleur prédéterminée.

Ladite au moins une information peut par exemple comporter une forme géométrique lumineuse telle un rectangle ou un bandeau de couleur ambre pour représenter la première alerte, et alternativement, la même forme de rectangle ou de bandeau de couleur rouge pour représenter la seconde alerte.

En outre, une telle forme géométrique lumineuse peut être affichée en fond d'un indicateur numérique affichant une valeur courante de la vitesse de rotation NR.

Par ailleurs, lorsque le giravion 1 comporte un premier moteur 3 et un deuxième moteur 4, et que la panne de régulation PAN affecte le premier système de régulation 13 du premier moteur 3, le procédé 40 peut comporter une commande 46 d'un dispositif réversible de transmission pour empêcher la transmission d'un couple moteur du premier moteur 3 vers la chaîne de transmission de puissance 11.

Une telle commande 46 peut alors être mise en œuvre après la génération 45 de la seconde alerte, par exemple automatiquement après un intervalle de temps prédéterminé ou manuellement par un pilote du giravion 1.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Le cadre de la présente invention est défini par l'énoncé des revendications.

## Revendications

1. Procédé de surveillance (30, 40) d'un fonctionnement d'une installation motrice (2) de giravion (1), ladite installation motrice (2) comportant au moins un moteur (3, 4), ledit giravion (1) comportant au moins un rotor de sustentation (5) entraîné en rotation par ladite installation motrice (2),
ledit procédé de surveillance (30, 40) comportant les étapes suivantes :
- détection (31, 41 ) d'une panne de régulation (PAN) affectant un système de régulation (13, 14) dudit au moins un moteur (3, 4),
- détection (32, 42) d'une vitesse de rotation (NR) courante dudit au moins un rotor de sustentation (5),
- détermination (33, 43) d'une condition de compatibilité (COMP) ou d'une condition d'incompatibilité (INCOMP) entre une phase de vol courante et ladite vitesse de rotation (NR),
**caractérisé en ce que** ledit procédé de surveillance (30, 40) comporte les étapes suivantes :
- dans un premier mode de fonctionnement (MOD1), en présence de ladite condition de compatibilité (COMP) et de ladite panne de régulation (PAN), génération (34, 44) d'une première alerte représentative simultanément de ladite panne de régulation (PAN) et de ladite condition de compatibilité (COMP), et
- dans un second mode de fonctionnement (MOD2), en présence de ladite condition d'incompatibilité (INCOMP) et de ladite panne de régulation (PAN), génération (35, 45) d'une seconde alerte représentative simultanément de ladite panne de régulation (PAN) et de ladite condition d'incompatibilité (INCOMP).

2. Procédé selon la revendication 1,
**caractérisé en ce que** ladite condition de compatibilité (COMP) est déterminée lorsque ladite vitesse de rotation (NR) courante appartient à un intervalle de valeurs défini par une consigne de vitesse de rotation (NRcons) moins une première marge (n) et ladite consigne de vitesse de rotation (NRcons) plus une seconde marge (m) et alternativement ladite condition d'incompatibilité (INCOMP) est déterminée lorsque ladite vitesse de rotation (NR) courante est exclue dudit intervalle de valeurs.

3. Procédé selon la revendication 2,
**caractérisé en ce que** ladite consigne de vitesse de rotation (NRcons) est variable en fonction de ladite phase de vol courante .

4. Procédé selon l'une quelconque des revendications 2 à 3,
**caractérisé en ce que** ladite première marge (n) et ladite seconde marge (m) sont variables en fonction de ladite phase de vol courante.

5. Procédé selon la revendication 1,
**caractérisé en ce que** ladite condition de compatibilité (COMP) est déterminée lorsque ladite vitesse de rotation (NR) courante appartient à une plage prédéterminée de valeurs acceptables permettant de continuer ladite phase de vol courante et alternativement ladite condition d'incompatibilité (INCOMP) est déterminée lorsque ladite vitesse de rotation (NR) courante est exclue de ladite plage prédéterminée de valeurs acceptables permettant de continuer ladite phase de vol courante.

6. Procédé selon la revendication 5,
**caractérisé en ce que** ladite plage prédéterminée comporte une borne supérieure définie pour qu'une vitesse tangentielle en bout de pale d'une pale (12) dudit au moins un rotor de sustentation (5) soit maintenue inférieure à la vitesse du son.

7. Procédé selon l'une quelconque des revendications 5 à 6,
**caractérisé en ce que** ladite plage prédéterminée comporte une borne inférieure définie pour fournir une poussée minimale permettant audit giravion (1) d'effectuer un vol à une altitude constante à une vitesse d'avancement de croisière.

8. Procédé selon l'une quelconque des revendications 1 à 7,
**caractérisé en ce qu'**un passage dudit premier mode de fonctionnement (MOD1) vers ledit second mode de fonctionnement (MOD2) est irréversible.

9. Procédé selon l'une quelconque des revendications 1 à 8,
**caractérisé en ce que** ladite génération (34, 44) de la première alerte comporte un premier affichage (341, 441) sur un afficheur (10) d'au moins une information représentée avec une première couleur prédéterminée.

10. Procédé selon la revendication 9,
**caractérisé en ce que** ladite génération (35, 45) de la seconde alerte comporte un second affichage (351, 451) sur ledit afficheur (10) de ladite au moins une information représentée avec une seconde couleur prédéterminée différente de ladite première couleur prédéterminée.

11. Procédé selon l'une quelconque des revendications 1 à 10,
**caractérisé en ce que**, ledit au moins un moteur (3, 4) comportant un premier moteur (3) et un deuxième moteur (4), ladite panne de régulation (PAN) affectant un premier système de régulation (13) dudit premier moteur (3), lorsque ladite seconde alerte est générée, le procédé (30) comporte une commande (36) d'un arrêt dudit premier moteur (3).

12. Procédé selon l'une quelconque des revendications 1 à 10,
**caractérisé en ce que**, ledit au moins un moteur (3, 4) comportant un premier moteur (3) et un deuxième moteur (4), ladite panne de régulation (PAN) affectant un premier système de régulation (13) dudit premier moteur (3), lorsque ladite seconde alerte est générée, le procédé (40) comporte une commande (46) d'un dispositif réversible de transmission pour empêcher la transmission d'un couple moteur dudit premier moteur (3) vers une chaîne de transmission de puissance (11).

13. Giravion (1) comportant au moins un rotor de sustentation (5) entraîné en rotation par une installation motrice (2), ladite installation motrice (2) comportant au moins un moteur (3, 4),
ledit giravion (1) comportant un système de surveillance (6) comportant :
- au moins un senseur de panne (23, 24) détectant une panne de régulation (PAN) affectant un système de régulation (13, 14) dudit au moins un moteur (3, 4) ,
- un senseur de vitesse (7) mesurant une vitesse de rotation (NR) courante dudit au moins un rotor de sustentation (5),
- un contrôleur (8) déterminant une condition de compatibilité (COMP) ou une condition d'incompatibilité (INCOMP) entre une phase de vol courante et ladite vitesse de rotation (NR),
**caractérisé en ce que** ledit contrôleur (8) génère, dans un premier mode de fonctionnement (MOD1), en présence de ladite condition de compatibilité (COMP) et de ladite panne de régulation (PAN), une première alerte représentative simultanément de ladite panne de régulation (PAN) et de ladite condition de compatibilité (COMP), et
et **en ce que** ledit contrôleur (8) de surveillance génère, dans un second mode de fonctionnement(MOD2), en présence de ladite condition d'incompatibilité (INCOMP) et de ladite panne de régulation (PAN), une seconde alerte représentative simultanément de ladite panne de régulation (PAN) et de ladite condition d'incompatibilité (INCOMP).

## Patentansprüche

1. Verfahren zur Überwachung (30, 40) des Betriebs einer Antriebsanlage (2) eines Drehflüglers (1), wobei die Antriebsanlage (2) mindestens einen Motor (3, 4) umfasst, der Drehflügler (1) mindestens einen von der Antriebsanlage (2) in Drehung versetzten Tragrotor (5) umfasst,
wobei das Überwachungsverfahren (30, 40) die folgenden Schritte umfasst:
• Erfassen (31, 41) eines Regelungsfehlers (PAN), der ein Regelsystem (13, 14) des mindestens einen Motors (3, 4) betrifft,
• Erfassen (32, 42) einer aktuellen Drehzahl (NR) des mindestens einen Tragrotors (5),
• Bestimmen (33, 43) eines Kompatibilitätszustandes (COMP) oder eines Inkompatibilitätszustandes (INCOMP) zwischen einer aktuellen Flugphase und der Drehzahl (NR),
**dadurch gekennzeichnet, dass** das Überwachungsverfahren (30, 40) die folgenden Schritte umfasst:
• in einem ersten Betriebsmodus (MOD1) bei Vorliegen des Kompatibilitätszustandes (COMP) und des Regelungsfehlers (PAN) Erzeugen (34, 44) einer ersten Warnmeldung, die gleichzeitig den Regelungsfehler (PAN) und den Kompatibilitätszustand (COMP) anzeigt, und
• in einem zweiten Betriebsmodus (MOD2) bei Vorliegen des Inkompatibilitätszustandes (INCOMP) und des Regelungsfehlers (PAN) Erzeugen (35, 45) einer zweiten Warnmeldung, die gleichzeitig den Regelungsfehler (PAN) und den Inkompatibilitätszustand (INCOMP) anzeigt.

2. Verfahren nach Anspruch 1,
**dadurch gekennzeichnet, dass** der Kompatibilitätszustand (COMP) festgestellt wird, wenn die genannte aktuelle Drehzahl (NR) in einen Wertebereich fällt, der durch einen Drehzahlsollwert (NRcons) abzüglich einer ersten Toleranz (n) und den Drehzahlsollwert (NRcons) zuzüglich einer zweiten Toleranz (m) definiert ist, und alternativ der Inkompatibilitätszustand (INCOMP) bestimmt wird, wenn die aktuelle Drehzahl (NR) außerhalb des genannten Wertebereichs liegt.

3. Verfahren nach Anspruch 2,
**dadurch gekennzeichnet, dass** der Drehzahlsollwert (NRcons) in Abhängigkeit von der aktuellen Flugphase variabel ist.

4. Verfahren nach einem der Ansprüche 2 bis 3,
**dadurch gekennzeichnet, dass** die erste Toleranz (n) und die zweite Toleranz (m) in Abhängigkeit von der aktuellen Flugphase variabel sind.

5. Verfahren nach Anspruch 1,
**dadurch gekennzeichnet, dass** der Kompatibilitätszustand (COMP) festgestellt wird, wenn die aktuelle Drehzahl (NR) in einen vorgegebenen Bereich akzeptabler Werte fällt, der die Fortsetzung der aktuellen Flugphase ermöglicht, und alternativ der Inkompatibilitätszustand (INCOMP) festgestellt wird, wenn die aktuelle Drehzahl (NR) außerhalb des vorgegebenen Bereichs akzeptabler Werte liegt, der die Fortsetzung der aktuellen Flugphase ermöglicht.

6. Verfahren nach Anspruch 5,
**dadurch gekennzeichnet, dass** der vorgegebene Bereich eine Obergrenze umfasst, die so definiert ist, dass eine Tangentialgeschwindigkeit am Blattende eines Blattes (12) des mindestens einen Tragrotors (5) unterhalb der Schallgeschwindigkeit bleibt.

7. Verfahren nach einem der Ansprüche 5 bis 6,
**dadurch gekennzeichnet, dass** der vorgegebene Bereich eine Untergrenze umfasst, die so definiert ist, dass ein Mindestschub bereitgestellt wird, der es dem Drehflügler (1) ermöglicht, einen Flug in konstanter Höhe mit einer Reisegeschwindigkeit durchzuführen.

8. Verfahren nach einem der Ansprüche 1 bis 7,
**dadurch gekennzeichnet, dass** ein Übergang von dem ersten Betriebsmodus (MOD1) zu dem zweiten Betriebsmodus (MOD2) irreversibel ist.

9. Verfahren nach einem der Ansprüche 1 bis 8,
**dadurch gekennzeichnet, dass** das Erzeugen (34, 44) der ersten Warnmeldung ein erstes Anzeigen (341, 441) mindestens einer mit einer ersten vorgegebenen Farbe dargestellten Information auf einem Display (10) umfasst.

10. Verfahren nach Anspruch 9,
**dadurch gekennzeichnet, dass** das Erzeugen (35, 45) der zweiten Warnmeldung ein zweites Anzeigen (351, 451) der mindestens einen Information auf dem Display (10) einer zweiten vorbestimmten Farbe umfasst, die sich von der ersten vorbestimmten Farbe unterscheidet.

11. Verfahren nach einem der Ansprüche 1 bis 10,
**dadurch gekennzeichnet, dass** der mindestens eine Motor (3, 4) einen ersten Motor (3) und einen zweiten Motor (4) umfasst, wobei der Regelungsfehler (PAN) ein erstes Regelsystem (13) des ersten Motors (3) betrifft, und wobei das Verfahren (30), wenn die zweite Warnmeldung erzeugt wird, einen Befehl (36) zum Abschalten des ersten Motors (3) umfasst.

12. Verfahren nach einem der Ansprüche 1 bis 10,
**dadurch gekennzeichnet, dass** der mindestens eine Motor (3, 4) einen ersten Motor (3) und einen zweiten Motor (4) umfasst, wobei der Regelungsfehler (PAN) ein erstes Regelsystem (13) des ersten Motors (3) betrifft, und wobei das Verfahren (40), wenn die zweite Warnmeldung generiert wird, ein Ansteuern (46) einer umkehrbaren Getriebevorrichtung umfasst, um die Übertragung eines Antriebsmoments des ersten Motors (3) auf einen Kraft-übertragungsstrang (11) zu verhindern.

13. Drehflügler (1) mit mindestens einem Tragrotor (5), der von einer Antriebsanlage (2) in Drehung versetzt wird, wobei die Antriebsanlage (2) mindestens einen Motor (3, 4) umfasst,
wobei der Drehflügler (1) ein Überwachungssystem (6) umfasst, das Folgendes umfasst:
• mindestens einen Fehlersensor (23, 24), der einen Regelungsfehler (PAN) erfasst, der ein Regelsystem (13, 14) des mindestens einen Motors (3, 4) betrifft,
• einen Drehzahlsensor (7), der eine aktuelle Drehzahl (NR) des mindestens einen Tragrotors (5) misst,
• eine Steuerung (8), die einen Kompatibilitätszustand (COMP) oder einen Inkompatibilitätszustand (INCOMP) zwischen einer aktuellen Flugphase und der Drehzahl (NR) ermittelt, **dadurch gekennzeichnet, dass** die Steuerung (8) in einem ersten Betriebsmodus (MOD1) bei Vorliegen des Kompatibilitätszustandes (COMP) und des Regelungsfehlers (PAN) eine erste Warnmeldung erzeugt, die gleichzeitig den Regelungsfehler (PAN) und den Kompatibilitätszustand (COMP) anzeigt, und
dass die Steuerung (8) in einem zweiten Betriebsmodus (MOD2) bei Vorliegen des Inkompatibilitätszustandes (INCOMP) und des Regelungsfehlers (PAN) eine zweite Warnmeldung erzeugt, die gleichzeitig den Regelungsfehler (PAN) und den Inkompatibilitätszustand (INCOMP) anzeigt.

## Claims

1. Method (30, 40) for monitoring an operation of a rotorcraft (1) engine installation (2), said engine installation (2) comprising at least one engine (3, 4), said rotorcraft (1) comprising at least one lift rotor (5) rotated by said engine installation (2),
said monitoring method (30, 40) comprising the following steps:
- detection (31, 41) of a regulation breakdown (PAN) affecting a regulation system (13, 14) of said at least one engine (3, 4),
- detection (32, 42) of a current rotation speed (NR) of said at least one lift rotor (5),
- determination (33, 43) of a compatibility condition (COMP) or of an incompatibility condition (INCOMP) between a current flight phase and said rotation speed (NR),
**characterised in that** said monitoring method (30, 40) comprises the following steps:
- in a first operating mode (MOD1), in the presence of said compatibility condition (COMP) and of said regulation breakdown (PAN), generation (34, 44) of a first alert, simultaneously representative of said regulation breakdown (PAN) and of said compatibility condition (COMP), and
- in a second operating mode (MOD2), in the presence of said incompatibility condition (INCOMP) and of said regulation breakdown (PAN), generation (35, 45) of a second alert, simultaneously representative of said regulation breakdown
(PAN) and of said incompatibility condition (INCOMP).

2. Method according to claim 1,
**characterised in that** said compatibility condition (COMP) is determined when said current rotation speed (NR) belongs to a value interval defined by a rotation speed setpoint (NRcons) less a first margin (n) and said rotation speed setpoint (NRcons) plus a second margin (m) and alternatively, said incompatibility condition (INCOMP) is determined, when said current rotation speed (NR) is excluded from said value interval.

3. Method according to claim 2,
**characterised in that** said rotation speed setpoint (NRcons) is variable as a function of said current flight phase.

4. Method according to any one of claims 2 to 3,
**characterised in that** said first margin (n) and said second margin (m) are variable as a function of said current flight phase.

5. Method according to claim 1,
**characterised in that** said compatibility condition (COMP) is determined when said current rotation speed (NR) belongs to a predetermined range of acceptable values, making it possible to continue said current flight phase, and alternatively, said incompatibility condition (INCOMP) is determined, when said current rotation speed (NR) is excluded from said predetermined range of acceptable values, making it possible to continue said current flight phase.

6. Method according to claim 5, **characterised in that** said predetermined range comprises a defined upper limit, such that a vane end tangential speed of a vane (12) of said at least one lift rotor (5) is maintained less than the speed of sound.

7. Method according to any one of claims 5 to 6, **characterised in that** said predetermined range comprises a defined lower limit to provide a minimal thrust, making it possible for said rotorcraft (1) to fly at a constant altitude, at a forward cruise speed.

8. Method according to any one of claims 1 to 7, **characterised in that** a passage from said first operating mode (MOD1) to said operating mode (MOD2) is irreversible.

9. Method according to any one of claims 1 to 8, **characterised in that** said generation (34, 44) of the first alert comprises a first display (341, 441) on a display unit (10) of at least one piece of information represented with a first predetermined colour.

10. Method according to claim 9, **characterised in that** said generation (35, 45) of the second alert comprises a second display (351, 451) on said display unit (10) of said at least one piece of information represented with a second predetermined colour, different from said first predetermined colour.

11. Method according to any one of claims 1 to 10,
**characterised in that**, said at least one engine (3, 4) comprising a first engine (3) and a second engine (4), said regulation breakdown (PAN) affecting a first regulation system (13) of said first engine (3), when said second alert is generated, the method (30) comprises a control (36) of a stopping of said first engine (3).

12. Method according to any one of claims 1 to 10, **characterised in that**, said at least one engine (3, 4) comprising a first engine (3) and a second engine (4), said regulation breakdown (PAN) affecting a first regulation system (13) of said first engine (3), when said second alert is generated, the method (40) comprises a control (46) of a reversible transmission device, to prevent the transmission of an engine torque of said first engine (3) to a power transmission chain (11).

13. Rotorcraft (1) comprising at least one lift rotor (5), rotated by an engine installation (2), said engine installation (2) comprising at least one engine (3, 4) said rotorcraft (1) comprising a monitoring system (6) comprising:
- at least one breakdown sensor (23, 24) detecting a regulation breakdown (PAN) affecting a regulation system (13, 14) of said at least one engine (3, 4),
- a speed sensor (7) measuring a current rotation speed (NR) of said at least one lift rotor (5), - a controller (8) determining a compatibility condition (COMP) or an incompatibility condition (INCOMP) between a current flight phase and said rotation speed (NR),
**characterised in that** said controller (8) generates, in a first operating mode (MOD1), in the presence of said compatibility condition (COMP) and of said regulation breakdown (PAN), a first alert, simultaneously representative of said regulation breakdown (PAN) and of said compatibility condition (COMP), and
and **in that** said monitoring controller (8) generates, in a second operating mode (MOD2), in the presence of said incompatibility condition (INCOMP) and of said regulation breakdown (PAN), a second alert, simultaneously representative of said regulation breakdown (PAN) and of said incompatibility condition (INCOMP).
